Europäisches Patentamt

European Patent Office

Office européen des brevets

(11) Veröffentlichungsnummer: **0 146 014**
A2

# (12) EUROPÄISCHE PATENTANMELDUNG

(21) Anmeldenummer: 84114227.6

(22) Anmeldetag: 24.11.84

(51) Int. Cl.⁴: **C 08 L 83/04**, C 09 K 3/10

(30) Priorität: 16.12.83 DE 3345560

(43) Veröffentlichungstag der Anmeldung: 26.06.85
Patentblatt 85/26

(84) Benannte Vertragsstaaten: DE FR GB IT SE

(71) Anmelder: GOETZE AG,
Bürgermeister-Schmidt-Strasse 17,
D-5093 Burscheid 1 (DE)

(72) Erfinder: Zerfass, Hans-Rainer, Dr., Finkenweg 8,
D-5093 Burscheid (DE)
Erfinder: Giesen, Franz-Josef, Am Alten Turm 1a,
D-5068 Odenthal 3 (DE)
Erfinder: Menzel, Wolfgang, Dr., Hochstiftweg 8,
D-7521 Ubstadt-Weiher (DE)

(54) Niedrig, viskoses, additions- und kondensationsvernetzendes Polysilikonharz oder -elastomer.

(57) Eine niedrig viskose und unter Verwendung von Metallverbindungen katalytisch additions- und kondensationsvernetzende Polysilikonharz- oder Polysilikonelastomerzusammensetzung für insbesondere die Herstellung von Imprägnationen oder Überzügen enthält Zusätze an mit den Metallverbindungen reagierenden organischen Komplexbildnern, wie insbesondere organische Chelatbildner auf der Basis von Ketoximen und/oder 1,3 Diketoverbindungen. Auf diese Weise können die Topfzeiten der Imprägniermittelzusammensetzungen auf einen Monat und mehr wesentlich erhöht werden, so daß mit ein und demselben Ansatz vor allem Zylinderkopfdichtungen für Verbrennungskraftmaschinen vollautomatisch in der Massenproduktion wirtschaftlich imprägniert oder mit Überzügen versehen werden können. Die Anwesenheit der komplexbildenden Substanzen beeinflußt den thermischen Vernetzungsvorgang des Mittels.

Erweiterter Anmeldungstext FW 1926

0146014

- 1 -

## Niedrig viskoses, additions- und kondensationsvernetzendes Polysilikonharz oder -elastomer.

Die Erfindung betrifft ein niedrig viskoses, unter Verwendung von Metallverbindungen additions- oder kondensationsvernetzendes Polysilikonharz oder -elastomer, welches insbesondere für die Herstellung von Imprägnationen, Überzügen oder Auflagen vorzugsweise in der Massenfertigung von Flachdichtungen einsetzbar ist.

Beispielsweise aus der US-PS 3.970.322 ist es bekannt, Zylinderkopfdichtungen für Verbrennungskraftmaschinen, bestehend aus gegebenenfalls metallisch verstärkten Faservliesmaterialien, vor allem zur Verbesserung der Festigkeitswerte, des Abdichtvermögens und der Beständigkeit gegenüber den Abdichtmedien zu imprägnieren. Imprägniermittel sind bevorzugt organische, synthetische und vollständig vernetzbare Flüssigkeiten, wie niedermolekulare Polybutadiene oder aber auch flüssige Polyacrylate und Systeme mit Isocyanaten oder Epoxiden mit Alkoholen oder Aminen. Das Imprägnieren erfolgt meist durch Tauchen, Besprühen oder Bewalzen der fertig mit Einfassungen versehenen Zylinderkopfdichtungen oder aber auch gegebenenfalls des rohen Dichtungsmaterials. Anschließend erfolgt die Vernetzung meist thermisch unter dem gegebenenfalls erforderlichen Einsatz von Vernetzungshilfsmitteln durch Erhitzen der imprägnierten Dichtungen.

Inzwischen sind beispielsweise aus der Literaturstelle in

0146014

- 2 -

"Modern Plastic International" vom Februar 1979, Seiten 50 bis 55, weitere vollständig vernetzbare, organische, synthetische und niedrig viskose Polymersysteme entsprechend der US-PS 3.970.322 bekannt, welche aus Silikonharzen beziehungsweise Silikonelastomeren bestehen, die aus einem Zwei- oder Mehrkomponentensystem mit verschiedenen Polysiloxanen unter Verwendung von metallorganischen Verbindungen katalytisch unter Bildung von Polyaddukten vernetzen.

Ebenso sind kondensationsvernetzende flüssige Silikonelastomer- beziehungsweise Silikonharzsysteme bekannt, welche beispielsweise aus verschiedenen Hydroxypolysiloxanen bestehen und unter Verwendung von meist anorganischen Metallverbindungen als Katalysatoren unter Abscheidung des Kondensats vernetzen. Solche Polysiloxansysteme werden in der Praxis insbesondere zur Herstellung von Beschichtungen oder zur Herstellung von gegebenenfalls faserverstärkten elastomeren Formartikeln verwendet.

Nach der GB-PS 1.528.214 ist es auch schon bekannt, diese Mittel in Emulsionsform Faserdispersionen zuzugeben, aus denen nach Papierherstellungsverfahren Faservliese auch für Flachdichtungen gefertigt wurden, und nach der GB-PA 2.111.141 wurden schon Faservliesplatten für Flachdichtungen mit diesen Mitteln unmittelbar imprägniert.

Silikonharze beziehungsweise Silikonelastomere sind an und für sich vor allem aufgrund ihrer Elastizität, ihrer Temperaturbeständigkeit und ihrer universellen Medienbe-

0146014

- 3 -

ständigkeit ein ideales Imprägniermittel für Zylinderkopfdichtungen. Nachteilig sind jedoch bei derartigen
additions- und kondensationsvernetzenden Mehrkomponentensystemen die außerordentlich kurzen und als Topfzeiten
bezeichneten Verarbeitbarkeitszeiten nach dem gebrauchsfertigen Ansetzen der einzelnen Komponenten untereinander.

Nach den Literaturangaben liegen die Topfzeiten zwischen
nur 16 und 36 Stunden, so daß danach die zu fester Konsistenz ausgehärteten Überschüsse der Polymermischungen
nicht mehr verwendet werden können. Insbesondere in der
Massenfertigung beim Tauchimprägnieren oder Beschichten
von Zylinderkopfdichtungen wirken sich diese kurzen Topfzeiten besonders nachteilig aus, denn hier werden die
Dichtungen auf einer kontinuierlich arbeitenden Straße
nacheinander durch die großvolumigen Imprägniermittelbäder beziehungsweise die Beschichtungsanlagen geführt. Die
Imprägniermittelansätze härten aber unter kontinuierlicher Veränderung ihrer Viskosität aus, so daß schon nach
wenigen Stunden die Dichtungsplatten von den immer dickflüssiger werdenden Imprägniermitteln nicht mehr gleichmäßig mit dem gewünschten Porenfüllungsgrad durchtränkt
werden. Als Folge davon müßten die sehr teuren Mittel
noch vor Ablauf der eigentlichen Topfzeit ausgetauscht
werden, und es entstehen sehr kostspielige Abfallprodukte, die die Herstellungskosten der Dichtungen wesentlich erhöhen und damit unwirtschaftlich machen.

Die Hersteller dieser Systeme empfehlen zwar, zur Verlängerung der Topfzeiten die fertigen Ansätze zu kühlen,

- 4 -

in der Massenfertigung beim vollautomatischen Imprägnieren oder Beschichten von Zylinderkopfdichtungen scheiden allerdings diese Maßnahmen aus. Die großvolumigen Imprägniermittelbäder beziehungsweise auch die Vorratsbehälter der Beschichtungsanlagen sind im Betrieb üblicherweise bei Normaltemperaturen bei konstanter Viskosität nahezu pausenlos im Einsatz. Das Kühlen während der kurzen Ruhezeiten erfordert dagegen große und kostspielige Kühlaggregate und kann, wie abgeleitet, keinen durchgreifenden Erfolg haben.

Der vorliegenden Erfindung liegt daher die Aufgabe zugrunde, niedrig viskose, unter Verwendung von Metallverbindungen additions- oder kondensationsvernetzende Silikonharze oder Silikonelastomere zu schaffen, deren Topfzeiten mit einfachen Maßnahmen so wesentlich erhöht sind, daß die einzelnen Polymeransätze in der Massenfertigung über längere Zeiträume verarbeitbar sind und somit weitgehend verlustfrei arbeiten. Insbesondere sollen mit derartigen Silikonharzen oder Silikonelastomeren Flachdichtungen, wie insbesondere Zylinderkopfdichtungen, in einer kontinuzierlich arbeitenden Massenfertigung wirtschaftlich und daher kostengünstig imprägniert oder bebeschichtet werden können.

Erfindungsgemäß wird diese Aufgabe durch niedrig viskose, unter Verwendung von Metallverbindungen kondensations- oder additionsvernetzende Silikonharze oder Silikonelastomere gelöst, welche Zusätze an mit den Metallverbindungen komplexbildenden Substanzen enthalten. Als kom-

- 5 -

plexbildende Substanzen werden bevorzugt handelsübliche organische Chelatbildner eingesetzt, und sie bestehen, abgestimmt auf den jeweiligen Anwendungsfall, bei additionsvernetzenden Polysiloxansystemen mit metallorganischen Verbindungen als Katalysatoren aus Ketoximen wie Cyclohexanonoxim, während bei kondensationsvernetzenden Hydroxypolysiloxansystemen 1,3 Diketoverbindungen wie Acetylaceton oder Acetessigester bevorzugt eingesetzt werden. Die Zugabe der komplexebildenden Substanzen kann in einfacher Form oder in gelöster Form erfolgen und wird bevorzugt beim Ansatz der Polymere durch Vermischen der einzelnen Komponenten untereinander durchgeführt, wobei eine bestimmte Reihenfolge nicht einzuhalten ist. Die Gewichtsmenge an zugegebenen Chelatbildner ist stöchiometrisch auf die Menge des Metallkatalysators abgestimmt. Sie kann im Verhältnis zur Molmenge der Metallverbindungen zwischen 1 : 1 und 10 : 1, bevorzugt aber zwischen 6 : 1 und 8 : 1 liegen.

Es wurde gefunden, daß die erfindungsgemäß mit den Zusätzen versehenen Polymersysteme jetzt eine wesentlich auf drei Monate und mehr verlängerte Topfzeit aufweisen. Somit können mindestens über einen ganzen Monat Flachdichtungen gleichmäßig ohne Unterschiede im Porenfüllungsgrad mit ein und demselben Ansatz imprägniert oder beschichtet werden.

Wie an und für sich bisher nur aus wässrigen Systemen mit Metallionengehalten bekannt, scheinen erstaunlicherweise die Chelatbildner mit den Metallen der Metallverbindungen

- 6 -

auch in den organischen, nicht wässrigen Polymersystemen genauso stabile Komplexe zu bilden und so die Wirksamkeit der Katalysatoren zu maskieren und das langsame Aushärten der Imprägniermittel wesentlich zu verzögern beziehungsweise sogar vollständig zu unterbinden. Der bevorzugt eingesetzte hohe Anteil an Chelatbildnern im Verhältnis zu den Metallverbindungen garantiert, daß im Bad alle Metallverbindungen wirkungsvoll maskiert werden.

Ein Einfluß der Chelatbildner auf den thermischen Vernetzungsvorgang wurde nicht gefunden, und die mit Silikonharzen oder Silikonelastomeren mit Chelatbildnerzusatz imprägnierten oder beschichteten Zylinderkopfdichtungen zeigten funktionstechnisch gegenüber denen ohne Chelatbildnerzusatz imprägnierten oder beschichteten Zylinderkopfdichtungen nach dem Vernetzen keinen Unterschied. Offensichtlich scheinen die gebildeten Chelatkomplexe bei den Vernetzungstemperaturen zu zerfallen, so daß die Metallverbindungen dann katalytisch voll wirksam sind.

Durch die Erfindung wurde somit eine einfache Silikonharz- und Elastomerzusammensetzung gefunden, mit der sich aufgrund der wesentlich erhöhten Topfzeiten und damit wesentlich verringerter Abfallbildung Flachdichtungsmaterialien beziehungsweise Flachdichtungen, wie insbesondere Zylinderkopfdichtungen, in der Massenfertigung kostengünstig imprägnieren und beschichten lassen. Die so behandelten Zylinderkopfdichtungen weisen die Vorzüge silikonelastomer- beziehungsweise silikonharzimprägnierter und beschichteter Dichtungen bei gleichzeitig wirtschaftlicher Herstellung in vollautomatischer Massenfertigung auf.

Während die erfindungsgemäßen Silikonharz- und Silikonelastomeransätze bevorzugt zum Tauchimprägnieren und Beschichten von Zylinderkopfdichtungen eingesetzt werden,
ist es jedoch auch möglich, diese zum Imprägnieren oder
Beschichten nach anderen Verfahren zu verwenden, und im
Sinne der Erfindung können mit ihnen auch Auflagen auf
Flachdichtungen oder bevorzugt faserverstärkten Silikonharz- oder Silikonelastomerformteilen hergestellt werden,
beispielsweise auch im IM-Verfahren.

0146014

- 1 -

Patentansprüche:

1. Niedrig viskoses, unter Verwendung von Metallverbindungen additions- und kondensationsvernetzendes Polysilikonharz oder -elastomer, insbesondere für die Herstellung von Imprägnationen, Überzügen oder Auflagen für insbesondere eine kontinuierlich arbeitende Massenfertigung von imprägnierten, beschichteten und/oder mit Auflagen versehenen Flachdichtungen oder von gegebenenfalls faserverstärkten Faserartikeln, dadurch gekennzeichnet, daß die Polysilikonharz- oder Polysilikonelastomeransätze Zusätze an mit den Metallverbindungen komplexbildenden Substanzen enthalten.

2. Polymeransatz nach Anspruch 1, dadurch gekennzeichnet, daß die mit den Metallverbindungen komplexbildenden Substanzen handelsübliche organische Chelatbildner sind.

3. Polymeransatz nach den Ansprüchen 1 und 2, dadurch gekennzeichnet, daß die Chelatbildner aus Ketoximen und/oder 1,3 Diketoverbindungen bestehen.

4. Polymeransatz nach den Ansprüchen 1 bis 3, dadurch gekennzeichnet, daß bei Verwendung von organischen Metallverbindungen in additionsvernetzenden Silikonharz- und Silikonelastomersystemen die Chelatbildner aus Ketoximen bestehen.

5. Polymeransatz nach Anspruch 4, dadurch gekennzeichnet, daß das Ketoxim aus Cyclohexanonoxim besteht.

6. Polymeransatz nach den Ansprüchen 1 bis 3, dadurch gekennzeichnet, daß bei Verwendung anorganischer Metallverbindungen in kondensationsvernetzenden Silikonharz- und Silikonelastomersystemen die Chelatbildner aus 1,3 Diketoverbindungen bestehen.

7. Polymeransatz nach Anspruch 6, dadurch gekennzeichnet, daß die 1,3 Diketoverbindungen aus Acetylaceton und/oder Acetessigester bestehen.

8. Polymeransatz nach mindestens einem der Ansprüche 1 bis 7, dadurch gekennzeichnet, daß das Molverhältnis zwischen zugegebener Menge an Chelatbildnern zur eingesetzten Metallverbindungsmenge zwischen 1 : 1 und 10 : 1 liegt.

9. Polymeransatz nach mindestens einem der Ansprüche 1 bis 7, dadurch gekennzeichnet, daß das Molverhältnis zwischen zugegebener Menge an Chelatbildnern zur eingesetzten Metallverbindungsmenge zwischen 6 : 1 und 8 : 1 liegt.